# EUROPEAN PATENT APPLICATION

(11) **EP 4 481 859 A2**
(43) Date of publication of application: **25.12.2024**
(21) Application number: 24179468.4
(22) Date of filing: 03.06.2024
(51) Int. Cl.: H01M 4/62

(54) **POSITIVE ELECTRODE FOR RECHARGEABLE LITHIUM BATTERY AND RECHARGEABLE LITHIUM BATTERY INCLUDING THE SAME**

(30) Priority: 19.06.2023 KR 20230078545
(71) Applicant: Samsung SDI Co., Ltd., Yongin-si, Gyeonggi-do 17084 (KR)
(72) Inventor: Yang, Mihwa, 17084 Gyeonggi-do (KR); Kim, Minjae, 17084 Gyeonggi-do (KR); Seol, Jongheon, 17084 Gyeonggi-do (KR)
(74) Representative: Michalski Hüttermann & Partner Patentanwälte mbB

(57) **Abstract**

Disclosed are a positive electrode for a rechargeable lithium battery and a rechargeable lithium battery including the same. The positive electrode includes a positive electrode current collector and a positive electrode mixture layer on the positive electrode current collector, wherein the positive electrode mixture layer includes a positive electrode active material and a first binder, and the first binder is a hydrogenated nitrile butadiene rubber (HNBR) derivative.

## Description

### BACKGROUND

### 1. Field

A positive electrode for a rechargeable lithium battery and a rechargeable lithium battery including the same are disclosed.

### 2. Description of the Related Art

Recently, with the rapid spread of electronic devices that use batteries, such as mobile phones, laptop computers, and electric vehicles, the interest in rechargeable batteries having high energy density and high capacity is rapidly increasing. Accordingly, research and development to improve the performance of rechargeable lithium batteries is actively underway.

A rechargeable lithium battery includes a positive electrode and a negative electrode including an active material capable of intercalating and deintercalating lithium ions, and an electrolyte, and electrical energy is produced through oxidation and reduction reactions if lithium ions are intercalated/deintercalated from the positive electrode and negative electrode.

The positive electrode for a rechargeable lithium battery includes a positive electrode current collector and a positive electrode mixture layer thereon. The positive electrode mixture layer essentially includes a positive electrode active material, and optionally further includes a positive electrode binder and/or a conductive material (e.g., an electrically conductive material).

Polyvinylidene fluoride-based binders are widely used as positive electrode binders, which also act as resistors (e.g., electrical resistors).

Accordingly, in order to increase the cycle-life of a rechargeable lithium battery while increasing the adhesion of the positive electrode and lowering the resistance (e.g., the electrical resistance), it is useful to use polyvinylidene fluoride-based positive electrode binders at a minimum or reduced amount or to completely replace it with another binder.

### SUMMARY

Some embodiments of the present disclosure provide a positive electrode for a rechargeable lithium battery in which a polyvinylidene fluoride-based positive electrode binder is used in a reduced amount, minimally used or completely replaced with another binder.

Some embodiments provide a rechargeable lithium battery including the positive electrode.

Some embodiments provide a positive electrode for a rechargeable lithium battery including a positive electrode current collector and a positive electrode mixture layer on the positive electrode current collector, wherein the positive electrode mixture layer includes a positive electrode active material and a first binder, and the first binder includes a hydrogenated nitrile butadiene rubber (HNBR) derivative.

Some embodiments provide a rechargeable lithium battery including the positive electrode.

The positive electrode according to some embodiments may use a polyvinylidene fluoride-based positive electrode binder at a reduced or minimum amount, or may completely replace it with a hydrogenated nitrile butadiene rubber derivative. As a result, the cycle-life of the rechargeable lithium battery may be increased while increasing the adhesion of the positive electrode and lowering the resistance.

### BRIEF DESCRIPTION OF THE DRAWINGS

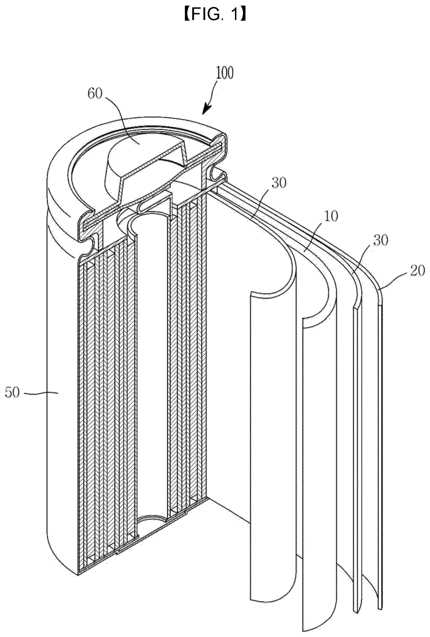

The accompanying drawing, together with the specification, illustrates an embodiment of the subject matter of the present disclosure, and, together with the description, serves to explain principles of embodiments of the subject matter of the present disclosure.

The accompanying drawing is a cutaway perspective view of a rechargeable lithium battery according to some embodiments.

### DETAILED DESCRIPTION

Hereinafter, embodiments of the present disclosure will be described in more detail. However, these embodiments are examples, the present disclosure is not limited thereto and the present disclosure is defined by the scope of the appended claims, and equivalents thereof.

As used herein, if a specific definition is not otherwise provided, it will be understood that if an element such as a layer, film, region, or substrate is referred to as being "on" another element, it can be directly on the other element or intervening elements may also be present.

As used herein, if a specific definition is not otherwise provided, the singular may also include the plural. In addition, unless otherwise specified, "A or B" may mean "including A, including B, or including A and B."

As used herein, "combination thereof" may mean a mixture of constituents, a stack, a composite, a copolymer, an alloy, a blend, and/or a reaction product.

As used herein, if a specific definition is not otherwise provided, "alkyl group" refers to a C1 to C20 alkyl group, "alkenyl group" refers to a C2 to C20 alkenyl group, "cycloalkenyl group" refers to a C3 to C20 cycloalkenyl group, "heterocycloalkenyl group" refers to a C3 to C20 heterocycloalkenyl group, "aryl group" refers to a C6 to C20 aryl group, "arylalkyl group" refers to a C6 to C20 arylalkyl group, the term "alkylene group" refers to a C1 to C20 alkylene group, "arylene group" refers to a C6 to C20 arylene group, "alkylarylene group" refers to a C6 to C20 alkylarylene group, "heteroarylene group" refers to a C3 to C20 heteroarylene group, and "alkoxylene group" refers to a C1 to C20 alkoxylene group.

As used herein, if a specific definition is not otherwise provided, "substituted" refers to replacement of at least one hydrogen atom by a substituent of a halogen atom (F, Cl, Br, or I), a hydroxyl group, a C1 to C20 alkoxy group, a nitro group, a cyano group, an amino group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, or a combination thereof.

Also, As used herein, if a specific definition is not otherwise provided, "hetero" means that at least one hetero atom of N, O, S, and P is included in the chemical formula.

As used herein, if a specific definition is not otherwise provided, the term "combination" refers to mixing and/or copolymerization.

As used herein, if a definition is not otherwise provided, in chemical formulas, hydrogen is bonded at the position if a chemical bond is not drawn where supposed to be given.

As used herein, a weight average molecular weight (Mw) may be a value measured using gel permeation chromatography (GPC).

### Positive Electrode

Some embodiments provide a positive electrode for a rechargeable lithium battery including a positive electrode current collector and a positive electrode mixture layer on the positive electrode current collector, wherein the positive electrode mixture layer includes a positive electrode active material and a first binder, and the first binder includes a hydrogenated nitrile butadiene rubber (HNBR) derivative.

The hydrogenated nitrile butadiene rubber derivative as the first binder has low resistance (e.g., electrical resistance) compared to the polyvinylidene fluoride-based positive electrode binder, while exhibiting adhesion strength at an equivalent level or higher.

Therefore, the positive electrode according to some embodiments may use a polyvinylidene fluoride-based positive electrode binder a reduced or minimum amount, or may completely replace it with a hydrogenated nitrile butadiene rubber derivative. As a result, the cycle-life of the rechargeable lithium battery can be increased while increasing the adhesion of the positive electrode and lowering the resistance (e.g., electrical resistance).

Hereinafter, the positive electrode of some embodiments will be described in more detail.

### First Binder (Hydrogenated Nitrile Butadiene Rubber Derivative)

The positive electrode mixture layer essentially includes a first binder, and the first binder includes a hydrogenated nitrile butadiene rubber (HNBR) derivative.

The first binder may include a repeating unit having an acrylonitrile-derived structure represented by Chemical Formula 1; a repeating unit including at least one selected from the repeating units having hydrogenated butadiene-derived structures represented by Chemical Formulas 2 and 3; and a repeating unit represented by Chemical Formula 4:

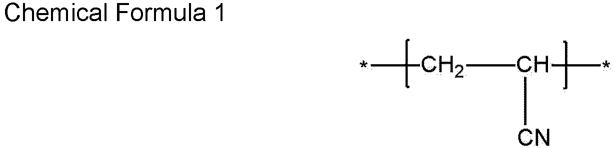

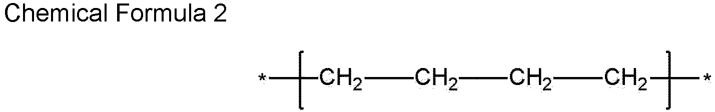

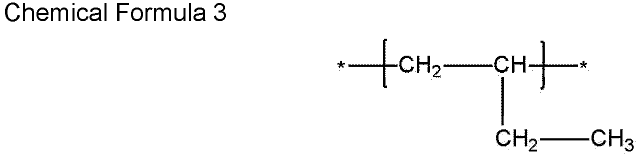

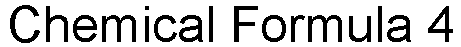

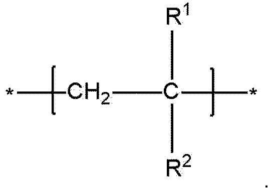

In Chemical Formula 4, R¹ and R² are each independently a substituted or unsubstituted C1 to C20 alkyl group, an ester group (-COOR, wherein R is a substituted or unsubstituted C1 to C20 alkyl group), a cyano group (-CN), pyrrolidonyl group (-C-₃H₅NHCO), a carboxyl group (-COOH), a caprolactamyl group (-NCOC₅H₁₀), a morpholinyl group (-NC₄H₈O), a hydroxy group (-OH), an amino group (-NH₂), a vinyl group (-CH=CH₂), an epoxy group (-COCH₂), or a thiol group (-SH).

The first binder including the hydrogenated nitrile butadiene rubber derivative may have higher adhesion strength as it further includes a repeating unit including Chemical Formula 4 compared to the hydrogenated nitrile butadiene rubber itself.

The first binder may be represented by Chemical Formula I.

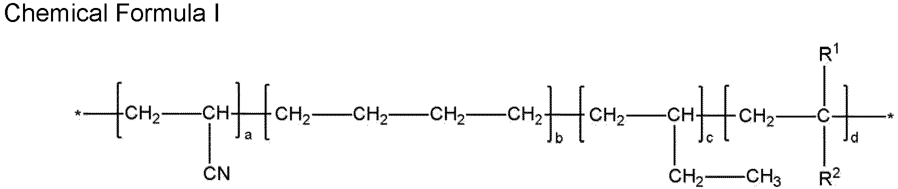

In Chemical Formula I, the definitions of R¹ and R² are the same as described above. For example, R¹ may be a methyl group and R² may be a carboxyl group (-COOH).

In some embodiments, in Chemical Formula I, a to d are each independently integers from 1 to 20.

the first binder may be represented by Chemical Formula I-1.

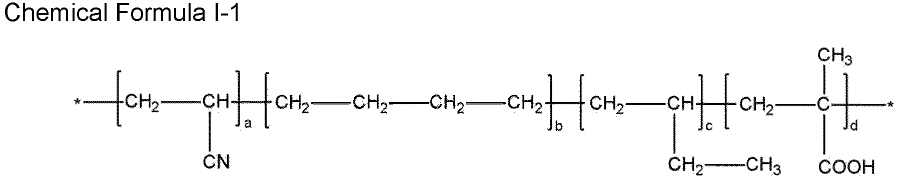

In Chemical Formula I-1, the definitions of a to d are the same as described above.

The first binder may have a weight average molecular weight (Mw) measured according to the GPC method of about 100,000 to about 1,000,000 g/mol (or daltons), about 100,000 to about 500,000 g/mol (or daltons), or about 100,000 to about 200,000 g/mol (or daltons).

The first binder may be included in an amount of, based on a total amount (100 wt%) of the positive electrode mixture layer, greater than or equal to about 0.1 wt% and less than or equal to about 5 wt%, greater than or equal to about 0.3 wt% and less than or equal to about 3 wt%, greater than or equal to about 0.5 wt% and less than or equal to about 2 wt%, or greater than or equal to about 0.55 wt% and less than or equal to about 1.1 wt%.

### Second Binder (Hydrogenated Nitrile Butadiene Rubber)

The positive electrode mixture layer may optionally further include a second binder, and the second binder may include a hydrogenated nitrile butadiene rubber (HNBR).

The second binder may include a repeating unit having an acrylonitrile-derived structure represented by Chemical Formula 5; a repeating unit including at least one selected from an alkylene repeating unit represented by Chemical Formula 6 and a repeating unit having a hydrogenated butadiene-derived structure represented by Chemical Formula 7; and a repeating unit represented by Chemical Formula 8:

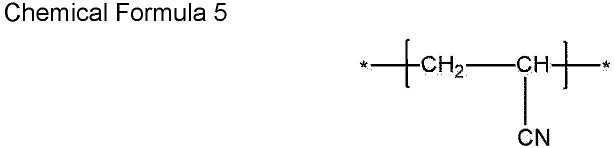

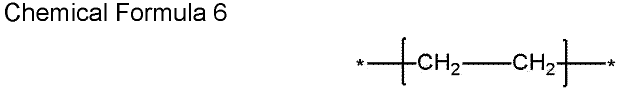

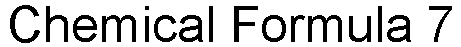

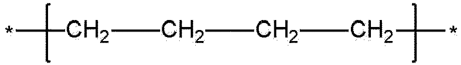

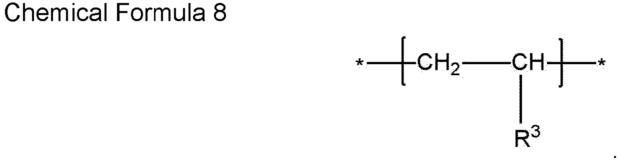

In Chemical Formula 8,
R³ is a substituted or unsubstituted C1 to C20 alkyl group, an ester group (-COOR, where R is a substituted or unsubstituted C1 to C20 alkyl group), a cyano group (-CN), a pyrrolidonyl group (-C-₃H₅NHCO), a carboxyl group (-COOH), a caprolactamyl group (-NCOC₅H₁₀), a morpholinyl group (-NC₄H₈O), a hydroxy group (-OH), an amino group (-NH₂), a vinyl group (-CH=CH₂), an epoxy group (-COCH₂), or a thiol group (-SH).

The second binder may be represented by Chemical Formula II or III.

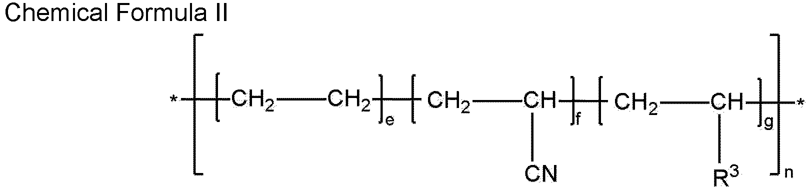

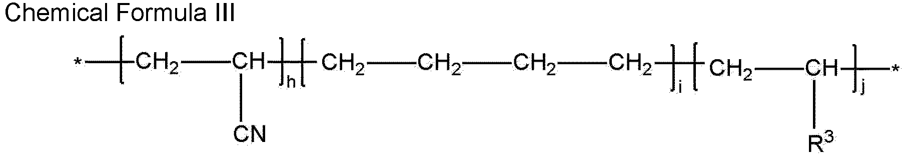

In Chemical Formulas II and III, the definition of R³ is the same as described above. As an example, R³ may be an ethyl group or an ester group (-COOR), wherein R may be a substituted or unsubstituted C1 to C20 alkyl group.

Additionally, in Chemical Formulas II and III, e to j and n may each independently be integers from 1 to 20.

Examples of the second binder are as follows.

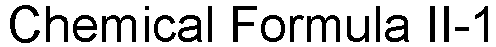

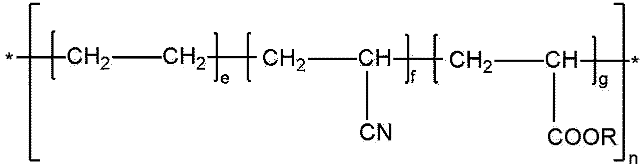

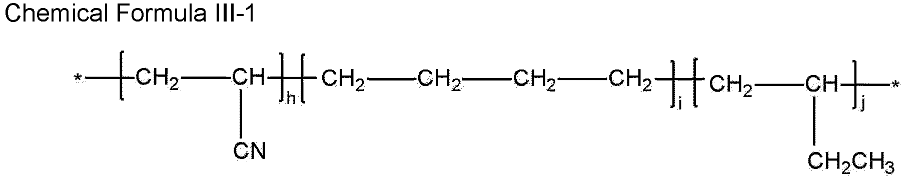

In Chemical Formulas II-1 and III-1, the definitions of R, e to j, and n are the same as described above.

The second binder may have a weight average molecular weight (Mw) measured according to the GPC method of about 100,000 to about 1,000,000 g/mol (or daltons), about 100,000 to about 500,000 g/mol (or daltons), or about 100,000 to about 200,000 g/mol (or daltons).

The second binder may be included in an amount of, based on a total amount (100 wt%) of the positive electrode mixture layer, greater than about 0 wt% and less than or equal to about 5 wt%, greater than or equal to about 0.1 wt% and less than or equal to about 3 wt%, greater than or equal to about 0.1 wt% and less than or equal to about 2 wt%, or greater than or equal to about 0.2 wt% and less than or equal to about 0.3 wt%.

### Third Binder (Polyvinylidene Fluoride, Derivative Thereof, Copolymer Thereof)

The positive electrode mixture layer may further optionally include a third binder, and the third binder may include polyvinylidene fluoride, a derivative thereof, a copolymer including the same, or a combination thereof.

It may be suitable or desirable to completely replace the third binder with the first binder; or to replace the third binder with a mixture of the first and second binders, but the third binder may be provided to ensure adhesion strength, compatibility, and/or the like.

The third binder may include a repeating unit having a vinylidene fluoride-derived structure represented by Chemical Formula 9:

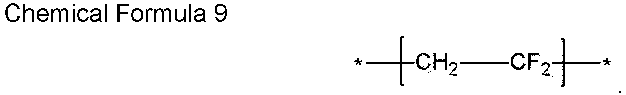

In some embodiments, the third binder may further optionally include a repeating unit including at least one selected from a repeating unit having a vinylidenefluoride derivative-derived structure represented by Chemical Formula 10 and a repeating unit having a hexafluoropropylene-derived structure represented by Chemical Formula 11:

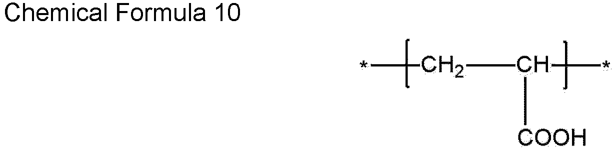

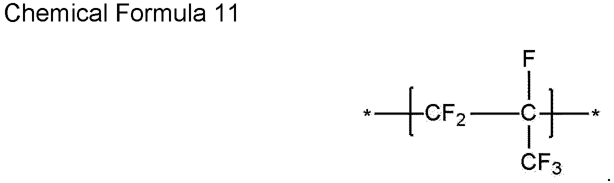

Examples of the third binder are as follows.

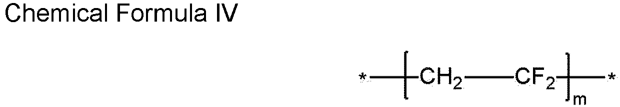

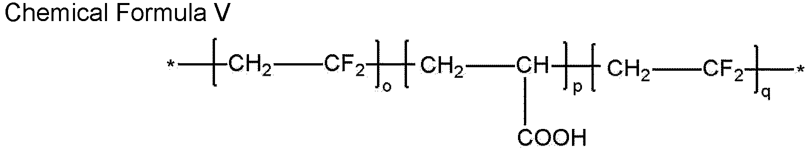

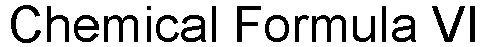

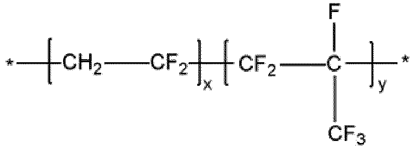

In Chemical Formulas IV to VI, m, o to q, x, and y may each independently be integers from 1 to 20.

The third binder may have a weight average molecular weight (Mw) measured according to the GPC method of about 500,000 to about 5,000,000 g/mol (or daltons), about 500,000 to about 3,000,000 g/mol (or daltons), or about 500,000 to about 1,500,000 g/mol (or daltons).

The third binder may be included in an amount of, based on a total amount (100 wt%) of the positive electrode mixture layer, greater than about 0 wt% and less than or equal to about 3 wt%, greater than about 0 wt% and less than or equal to about 3 wt%, greater than about 0 wt% and less than or equal to about 2 wt%, greater than about 0 wt% and less than or equal to about 1 wt%, or greater than about 0 wt% and less than or equal to about 0.1 wt%.

### Fourth Binder

The positive electrode mixture layer may further optionally include a fourth binder, and the fourth binder may include an acrylic binder, a derivative thereof, a copolymer including the same, or a combination thereof.

The fourth binder may include poly(meth)acrylic acid, poly(meth)acrylate, polymethyl(meth)acrylate, polyacrylonitrile, an acrylonitrile-styrene-butadiene copolymer, or a combination thereof.

The fourth binder may be included in an amount of, based on a total amount (100 wt%) of the positive electrode mixture layer, greater than about 0 wt% and less than or equal to about 3 wt%, greater than about 0 wt% and less than or equal to about 3 wt%, greater than about 0 wt% and less than or equal to about 2 wt%, greater than about 0 wt% and less than or equal to about 1 wt%, or greater than about 0 wt% and less than or equal to about 0.1 wt%.

### Crosslinking Agent

The positive electrode mixture layer may further include a crosslinking agent in addition to the binder to ensure that the positive electrode active material particles adhere to each other and the positive electrode active material adheres to the current collector.

In some embodiments, the crosslinking agent may be a crosslinking agent of the carbodiimide compound series. The crosslinking agent of the carbodiimide compound series may increase a bonding strength by crosslinking the first binder including the repeating unit including Chemical Formula 4.

In some embodiments, the crosslinking agent may be represented by Chemical Formula 12:

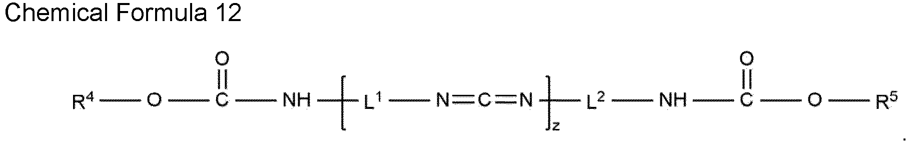

In Chemical Formula 12,
R⁴ and R⁵ are each independently a substituted or unsubstituted C1 to C20 alkyl group, a substituted or unsubstituted C3 to C20 cycloalkyl group, a substituted or unsubstituted C6 to C20 aryl group, or a substituted or unsubstituted C2 to C20 heteroaryl group including at least one selected from N, O, S and P;
L¹ and L² are each independently a substituted or unsubstituted C1 to C20 alkylene group, a substituted or unsubstituted C3 to C20 cycloalkylene group, a substituted or unsubstituted C6 to C20 arylene group, or a substituted or unsubstituted C2 to C20 heteroarylene group including at least one selected from N, O, S and P; and
z is an integer from 1 to 20.

Examples of the crosslinking agent are as follows:

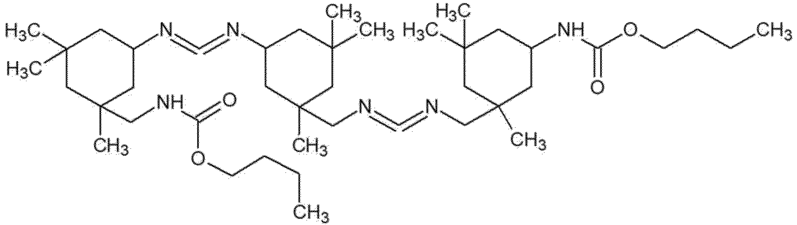

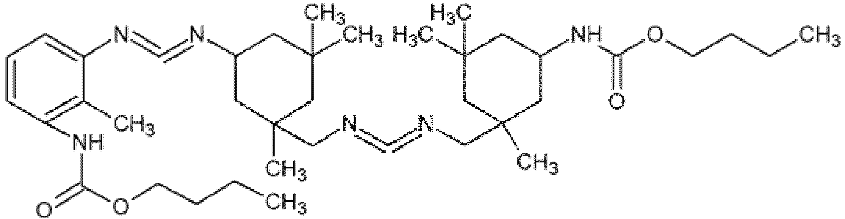

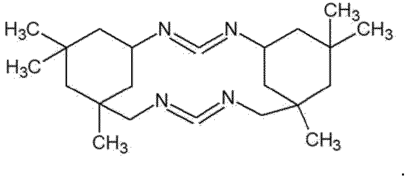

The crosslinking agent may be included in an amount of, based on a total amount (100 wt%) of the positive electrode mixture layer, greater than about 0 wt% and less than or equal to about 3 wt%, greater than about 0 wt% and less than or equal to about 3 wt%, greater than about 0 wt% and less than or equal to about 2 wt%, greater than about 0 wt% and less than or equal to about 1 wt%, or greater than about 0 wt% and less than or equal to about 0.1 wt%.

### Conductive Material

The positive electrode mixture layer may further include a conductive material (e.g., an electrically conductive material).

The conductive material is included to provide electrode conductivity (e.g., electrical conductivity) and any suitable electrically conductive material may be used as the conductive material unless it causes a chemical change (e.g., an undesirable chemical change in the rechargeable lithium battery). Examples thereof may be a carbon-based material such as natural graphite, artificial graphite, carbon black, acetylene black, ketjen black, a carbon fiber, a carbon nanofiber, a carbon nanotube, and the like; a metal-based material such as copper, nickel, aluminum, silver, and the like in a form of a metal powder and/or a metal fiber; a conductive polymer (e.g., an electrically conductive polymer) such as a polyphenylene derivative; or a mixture thereof.

The conductive material may be included in an amount of, based on a total amount (100 wt%) of the positive electrode mixture layer, greater than or equal to about 0.1 wt% and less than or equal to about 5 wt%, greater than or equal to about 0.5 wt% and less than or equal to about 3 wt%, or greater than or equal to about 1 wt% and less than or equal to about 2 wt%.

### Positive Electrode Active Material

The positive electrode active material may be a compound (lithiated intercalation compound) capable of intercalating and deintercalating lithium. In some embodiments, one or more types (or kinds) of composite oxides of lithium and a metal selected from cobalt, manganese, nickel, aluminum, and a combination thereof may be used.

The composite oxide may be a lithium transition metal composite oxide, and examples thereof may include lithium nickel-based oxide, lithium cobalt-based oxide, lithium manganese-based oxide, a lithium iron phosphate-based compound, cobalt-free lithium nickel-manganese-based oxide, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O₄-_{c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001 ≤b≤0.1); LiₐCoG_{b}O₂ (0.90≤a≤1.8, 0.001 ≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may be a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of metals excluding lithium in the lithium transition metal composite oxide. The high-nickel-based positive electrode active material may achieve high capacity and may be applied to high-capacity, high-density rechargeable lithium batteries.

An amount of the positive electrode active material may be about 90 wt% to about 99.5 wt% based on 100 wt% of the positive electrode mixture layer.

### Positive Electrode

The positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

In some embodiments, the positive electrode may further include an additive that can serve as a sacrificial positive electrode.

An amount of the positive electrode active material may be about 90 wt% to about 99.5 wt% based on 100 wt% of the positive electrode active material layer, and each amount of the binder and the conductive material may respectively be about 0.5 wt% to about 5 wt%, based on 100 wt% of the positive electrode active material layer.

The current collector may include Al, but is not limited thereto.

### Rechargeable Lithium Battery

Some embodiments provide a rechargeable lithium battery including the positive electrode.

This can improve cycle-life by including the positive electrode.

Hereinafter, at least some of the elements that make up the rechargeable lithium battery other than the positive electrode will be described in more detail.

### Negative electrode active material

The negative electrode active material may be a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as irregular-shaped, sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0 < x < 2), a Si-Q alloy (wherein Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to some embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

### Negative Electrode

The negative electrode for a rechargeable lithium battery includes a current collector and a negative electrode mixture layer on the current collector. The negative electrode mixture material layer includes a negative electrode active material and may further include a binder and/or a conductive material (e.g., an electrically conductive material).

For example, the negative electrode active mixture layer may include about 90 wt% to about 99 wt% of the negative electrode active material, about 0.5 wt% to about 5 wt% of the binder, and about 0 wt% to about 5 wt% of the conductive material based on 100 wt% of the negative electrode active mixture layer.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, it may further include a cellulose-based compound capable of imparting or increasing viscosity. The cellulose-based compound includes one or more of carboxylmethyl cellulose, hydroxypropylmethyl cellulose, methyl cellulose, and/or alkali metal salts thereof. The alkali metal may be Na, K, and/or Li.

The dry binder may be a polymer material capable of being fiberized (or fibrillized), and may be, for example, polytetrafluoroethylene, polyvinylidene fluoride, polyvinylidene fluoride-hexafluoropropylene copolymer, polyethylene oxide, or a combination thereof.

The conductive material is included to provide electrode conductivity (e.g., electrical conductivity), and any suitable electrically conductive material may be used as the conductive material unless it causes a chemical change (e.g., an undesirable chemical change in the rechargeable lithium battery). Examples of the conductive material may be a carbon-based material such as natural graphite, artificial graphite, carbon black, acetylene black, ketjen black, a carbon fiber, a carbon nanofiber, a carbon nanotube, and the like; a metal-based material such as copper, nickel, aluminum, silver, and the like in a form of a metal powder and/or a metal fiber; a conductive polymer (e.g., an electrically conductive polymer) such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal (e.g., an electrically conductive material), and a combination thereof, but is not limited thereto.

### Electrolyte

The electrolyte for a rechargeable lithium battery includes a non-aqueous organic solvent and a lithium salt.

The non-aqueous organic solvent serves as a medium for transmitting ions taking part in the electrochemical reaction of a battery.

The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone(valerolactone), caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane and/or 1,4-dioxolane, sulfolanes, and/or the like.

The non-aqueous organic solvent may be used alone or as a mixture of two or more.

In some embodiments, if using a carbonate-based solvent, cyclic carbonate and chain carbonate can be mixed together and used, and cyclic carbonate and chain carbonate can be mixed together at a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of a lithium salt may include one or more than one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers from 1 to 20), lithium trifluoromethane sulfonate, lithium tetrafluoroethanesulfonate, lithium difluorobis(oxalato)phosphate, (LiDFOB), and lithium bis(oxalato)borate (LiBOB).

### Separator

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The separator may include a porous substrate and a coating layer including an organic material, an inorganic material, or a combination thereof on one or both surfaces (e.g., two opposing surfaces) of the porous substrate.

The porous substrate may be a polymer film formed of any one selected from a polymer, or a copolymer or mixture of two or more of polyolefin such as polyethylene and/or polypropylene, a polyester such as polyethyleneterephthalate, or polybutyleneterephthalate, polyacetal, polyamide, polyimide, polycarbonate, polyether ketone, polyaryl ether ketone, polyether imide, polyamideimide, polybenzimidazole, polyether sulfone, polyphenylene oxide, a cyclic olefin copolymer, polyphenylene sulfide, polyethylene naphthalate, a glass fiber, TEFLON (tetrafluoroethylene), and polytetrafluoroethylene.

The organic material may include a polyvinylidene fluoride-based polymer and/or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto.

The organic material and the inorganic material may be mixed together in one coating layer, or a coating layer including an organic material and a coating layer including an inorganic material may be stacked.

### Rechargeable Lithium Battery

The accompanying drawing shows a cutaway perspective view of a rechargeable lithium battery according to some embodiments of the present invention. Referring to the accompanying drawing, the rechargeable lithium battery 100 includes an electrode assembly 40 with a separator 30 between the positive electrode 10 and the negative electrode 20, and a case 50 in which the electrode assembly 40 is housed. The positive electrode 10, negative electrode 20, and separator 30 may be impregnated with an electrolyte. The rechargeable lithium battery 100 may include a sealing member 60 that seals the case 50 as shown in the accompanying drawing.

The rechargeable lithium battery according to some embodiments may be applied to various suitable types (or kinds) of batteries such as cylindrical, prismatic, and pouch types, and the present disclosure is not limited thereto.

Hereinafter, aspects of embodiments of the present disclosure are illustrated in more detail with reference to examples. However, these examples are not limiting, and thus, the present disclosure is not limited thereto.

### Examples and Comparative Examples

### Examples 1 to 5 and Comparative Examples 1 to 3

### (1) Manufacture of Positive Electrodes

A positive electrode slurry was prepared by dispersing the positive electrode active material, binder, crosslinking agent, and conductive material in N-methyl-2-pyrrolidone according to the composition in Table 1. The positive electrode slurry was coated on aluminum foil having a thickness of 12 µm, then dried and compressed to manufacture a positive electrode.

### (2) Manufacture of Rechargeable Lithium Battery Cells

A coin half-cell was manufactured using a lithium metal counter electrode as the positive electrode and counter electrode. A separator made of porous polyethylene film (thickness: about 16 µm) was placed between the positive electrode and lithium metal counter electrode, and the electrolyte was injected. The electrolyte was a solution including 1.1 M LiPF₆ dissolved in a solvent mixed together with ethylene carbonate (EC) and ethylmethyl carbonate (EMC) in a volume ratio of 3:5.

**Table 1**

| (unit: wt%) | | | | | | | |
|---|---|---|---|---|---|---|---|
| | (A) Positive electrode active material | (B) Binder | | | (C) Crosslinki ng agent | (D) Conductive material | Electrode plate adhesion strength (gf/mm) |
| | A-1 | B-1 | B-2 | B-3 | C-1 | D-1 | |
| Ex. 1 | 97.7 | 1.1 | 0.2 | 0 | 0 | 1.0 | 2.9 |
| Ex. 2 | 98.25 | 0.55 | 0.2 | 0 | 0 | 1.0 | 1.3 |
| Ex. 3 | 98.3 | 0.7 | 0 | 0 | 0 | 1.0 | 1.5 |
| Ex. 4 | 98.2 | 0.7 | 0 | 0 | 0.1 | 1.0 | 2.2 |
| Ex. 5 | 98.2 | 0.7 | 0 | 0.1 | 0 | 1.0 | 1.6 |
| Comp. Ex. 1 | 98.1 | 0 | 0.2 | 0.7 | 0 | 1.0 | 0.8 |
| Comp. Ex. 2 | 98.3 | 0 | 0 | 0.7 | 0 | 1.0 | 0.2 |
| Comp. Ex. 3 | 97.7 | 0 | 1.3 | 0 | 0 | 1.0 | 0.1 |

The materials used in Table 1 are as follows.

### (A) Positive electrode active material

### A-1: LiNi_{0.94}Co_{0.045}Al_{0.015}O₂ (D50:13 µm)

### (B) Binder

B-1: Hydrogenated nitrile butadiene rubber derivative including a structural unit represented by Chemical Formula I-1 (Mw: 160,000 g/mol)

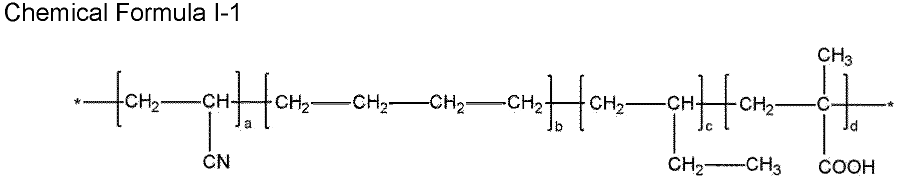

In Chemical Formula I, a to d are each independently integers from 1 to 20.

B-2: Hydrogenated nitrile butadiene rubber including a structural unit represented by Chemical Formula II-1 (Mw: 131,770 g/mol to 151,677 g/mol)

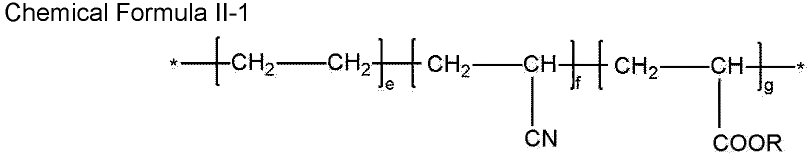

In Chemical Formula II-1, R is CH₃; e, f, and g are each independently integers from 1 to 20.

B-3: Polyvinylidene fluoride (Mw: 685,000 g/mol to 1,100,000 g/mol) including a structural unit represented by Chemical Formula IV

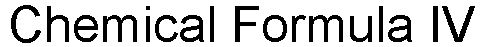

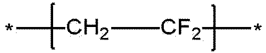

### (C) Crosslinking Agent

### C-1: A mixture of the following three carbodiimide compounds

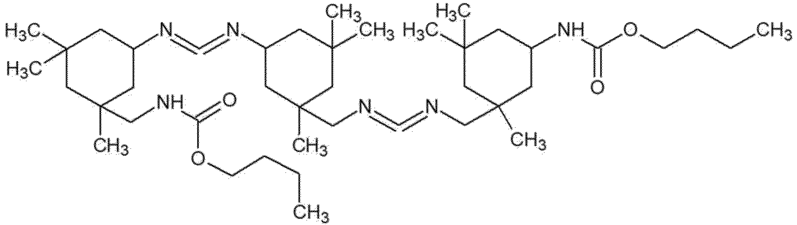

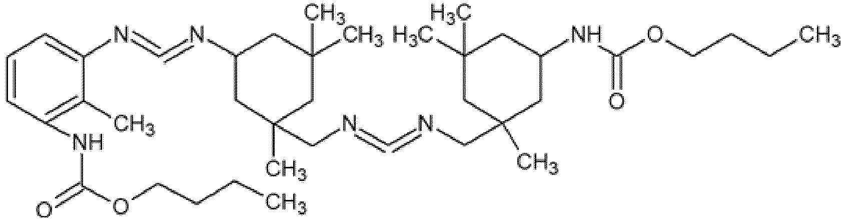

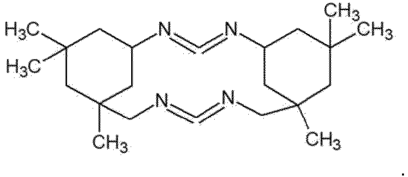

### (D) Conductive material

### D-1: carbon black

### Evaluation Examples

The evaluation results for the examples and comparative examples are shown in Table 2.

### Evaluation Example 1: Adhesion Strength (Peel Strength) of Positive Electrode

A positive electrode was cut into a size of 25 mm×120 mm to prepare 20 specimens. After adhering a double-sided adhesive tape on a glass substrate at room temperature, attaching a positive electrode plate to the double-sided adhesive tape, and roll-pressing it, one end of the positive electrode plate was folded at 180° and then, pulled at 1.5 mm/sec in an opposite direction of the one end to measure a force applied thereto.

The evaluation results are shown in Table 2. The force measurements of the 20 specimens were averaged to obtain peel strength.

### Evaluation Example 2: Resistance of Positive Electrode Mixture Layer

After measuring a 46 Pin voltage by placing a 46 Pin electrode resistance meter on a positive electrode and selecting an output current and a voltage range to generate a constant current, the 46 Pin voltage was considered as resistance of three layers of a mixture layer, an interface, and a current collector of the positive electrode, which was fitting-calculated into resistance of two parameters of the mixture layer and the interface.

### Evaluation Example 3: Cycle-life of Rechargeable Lithium Battery Cell (Capacity Retention Rate)

A rechargeable lithium battery cell was 100 times charged and discharged at a constant current of 0.5 C within a voltage range of 2.8 to 4.25 V at 25 °C, compared to a lithium metal. The room temperature charge/discharge measurements were used to evaluate capacity and charge/discharge efficiency, and the results are shown in Table 2. On the other hand, a capacity retention rate was calculated according to Equation 1. Capacity retention rate [%] = [Discharge capacity at 100th cycle / Discharge capacity at 1st cycle] × 100

**Table 2**

| | Positive electrode | | Rechargeable lithium battery cell |
|---|---|---|---|
| | Peel strength (gf/mm) | Mixture layer resistance (Ωcm) | Capacity retention rate (%) |
| Example 1 | 2.9 | 5.7 | 91 |
| Example 2 | 1.3 | 2.4 | 95 |
| Example 3 | 1.5 | 2.1 | 97 |
| Example 4 | 2.2 | 4.0 | 93 |
| Example 5 | 1.6 | 3.2 | 94 |
| Comparative Example 1 | 0.8 | 6.3 | 89 |
| Comparative Example 2 | 0.2 | 15.4 | 75 |
| Comparative Example 3 | 0.1 | 10.7 | 79 |

### Summary

The positive electrodes of Examples 1 to 5 used a polyvinylidene fluoride-based positive electrode binder in a minimum amount or completely replaced it with the first binder to decrease resistance, while increasing adhesion strength of the positive electrodes, and thereby, increased a cycle-life of rechargeable lithium batteries.

While this disclosure has been described in connection with what is presently considered to be practical example embodiments, it is to be understood that the present disclosure is not limited to the disclosed embodiments, but, on the contrary, is intended to cover various modifications and equivalent arrangements included within the spirit and scope of the appended claims, and equivalents thereof.

### Description of Symbols

100: rechargeable lithium battery
10: positive electrode
20: negative electrode
30: separator
40: electrode assembly
50: case
60: sealing member

## Claims

1. A positive electrode (10) for a rechargeable lithium battery, comprising:
a positive electrode current collector and a positive electrode (10) mixture layer on the positive electrode current collector,
wherein the positive electrode (10) mixture layer comprises a positive electrode active material and a first binder, and
the first binder comprises a hydrogenated nitrile butadiene rubber (HNBR) derivative.

2. The positive electrode (10) as claimed in claim 1, wherein:
the first binder comprises:
a repeating unit having an acrylonitrile-derived structure represented by Chemical Formula 1;
a repeating unit including at least one of the repeating units having a hydrogenated butadiene-derived structure represented by one of Chemical Formulas 2 and 3; and
a repeating unit represented by Chemical Formula 4: 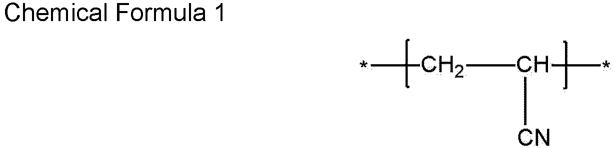 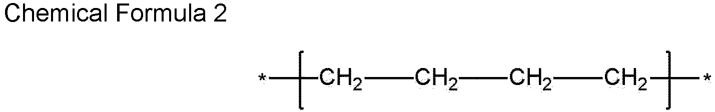 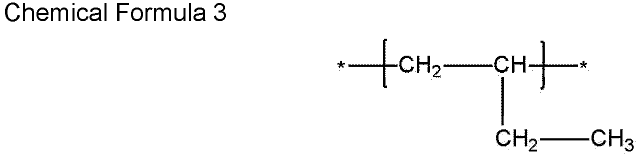 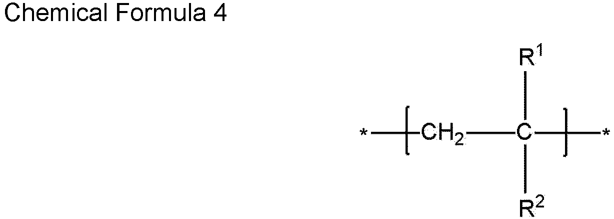 wherein, in Chemical Formula 4,
R¹ and R² are each independently a substituted or unsubstituted C1 to C20 alkyl group, an ester group (-COOR, wherein R is a substituted or unsubstituted C1 to C20 alkyl group), a cyano group (-CN), pyrrolidonyl group (-C-₃H₅NHCO), a carboxyl group (-COOH), a caprolactamyl group (-NCOC₅H₁₀), a morpholinyl group (-NC₄H₈O), a hydroxy group (-OH), an amino group (-NH₂), a vinyl group (-CH=CH₂), an epoxy group (-COCH₂), or a thiol group (-SH).

3. The positive electrode (10) as claimed in claim 1 or 2, wherein:
the first binder is included in an amount of greater than or equal to about 0.1 wt% and less than or equal to about 5 wt% based on a total amount of the positive electrode mixture layer.

4. The positive electrode (10) as claimed in any one of claims 1 to 3, wherein:
the positive electrode mixture layer further comprises a second binder, and
- the second binder comprises a hydrogenated nitrile butadiene rubber (HNBR); and/or
- the second binder comprises:
a repeating unit having an acrylonitrile-derived structure represented by Chemical Formula 5;
a repeating unit comprising at least one of an alkylene repeating unit represented by Chemical Formula 6 and a repeating unit having a hydrogenated butadiene-derived structure represented by Chemical Formula 7; and
a repeating unit represented by Chemical Formula 8: 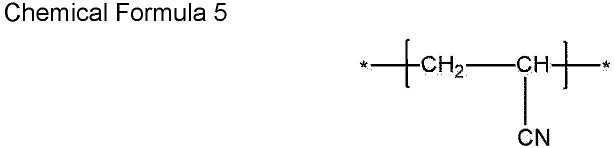 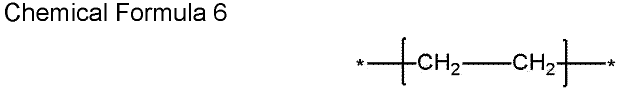 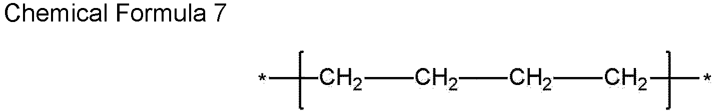 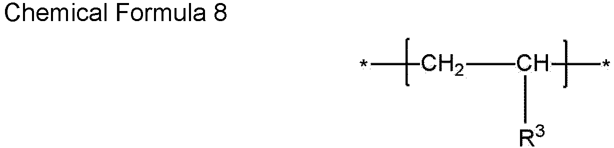 wherein, in Chemical Formula 8,
R³ is a substituted or unsubstituted C1 to C20 alkyl group, an ester group (-COOR, where R is a substituted or unsubstituted C1 to C20 alkyl group), a cyano group (-CN), a pyrrolidonyl group (-C-₃H₅NHCO), a carboxyl group (-COOH), a caprolactamyl group (-NCOC₅H₁₀), a morpholinyl group (-NC₄H₈O), a hydroxy group (-OH), an amino group (-NH₂), a vinyl group (-CH=CH₂), an epoxy group (-COCH₂), or a thiol group (-SH); and/or.
- the second binder is included in an amount of greater than about 0 wt% and less than or equal to about 5 wt% based on a total amount of the positive electrode mixture layer.

5. The positive electrode (10) for a rechargeable lithium battery as claimed in any one of claims 1 to 4, wherein:
the positive electrode mixture layer further comprises a third binder, wherein
- the third binder comprises polyvinylidene fluoride, a derivative thereof, a copolymer comprising the same, or a combination thereof; and/or
- the third binder comprises a repeating unit having a vinylidene fluoride-derived structure represented by Chemical Formula 9: 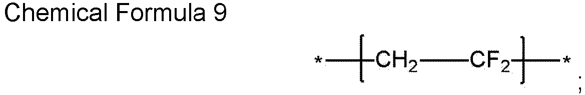 and/or
- the third binder further comprises a repeating unit comprising at least one of a repeating unit having a vinylidenefluoride derivative-derived structure represented by Chemical Formula 10 and a repeating unit having a hexafluoropropylene-derived structure represented by Chemical Formula 11:

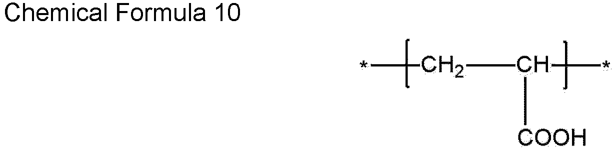

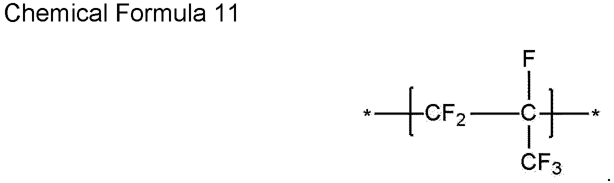

6. The positive electrode (10) as claimed in any one of claims 1 to 5, wherein:
the third binder is included in an amount of greater than about 0 wt% and less than or equal to about 3 wt% based on a total amount of the positive electrode mixture layer.

7. The positive electrode (10) as claimed in any one of claims 1 to 6, wherein:
the positive electrode mixture layer further comprises a fourth binder, wherein
- the fourth binder comprises poly(meth)acrylic acid, poly(meth)acrylate, polymethyl(meth)acrylate, polyacrylonitrile, an acrylonitrile-styrene-butadiene copolymer, or a combination thereof; and/or
- the fourth binder is included in an amount of greater than about 0 wt% and less than or equal to about 3 wt% based on a total amount of the positive electrode mixture layer.

8. The positive electrode (10) as claimed in any one of claims 1 to 7, wherein:
the positive electrode mixture layer further comprises:
- a crosslinking agent; and/or
- a crosslinking agent of the carbodiimide compound series: and/or.
- a crosslinking agent is represented by Chemical Formula 12: 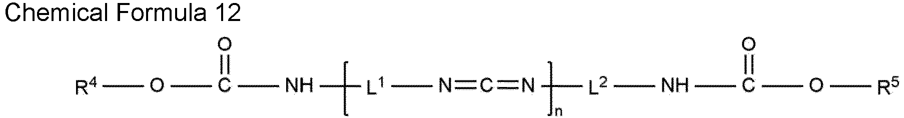 wherein, in Chemical Formula 12,
R⁴ and R⁵ are each independently a substituted or unsubstituted C1 to C20 alkyl group, a substituted or unsubstituted C3 to C20 cycloalkyl group, a substituted or unsubstituted C6 to C20 aryl group, or a substituted or unsubstituted C2 to C20 heteroaryl group including at least one selected from N, O, S and P;
L¹ and L² are each independently a substituted or unsubstituted C1 to C20 alkylene group, a substituted or unsubstituted C3 to C20 cycloalkylene group, a substituted or unsubstituted C6 to C20 arylene group, or a substituted or unsubstituted C2 to C20 heteroarylene group including at least one selected from N, O, S and P; and
z is an integer from 1 to 20.

9. The positive electrode (10) as claimed in any one of claims 1 to 8, wherein:
the positive electrode mixture layer further comprises a crosslinking agent, wherein the crosslinking agents is included in an amount of greater than about 0 wt% and less than or equal to about 3 wt% based on a total amount of the positive electrode mixture layer.

10. The positive electrode (10) as claimed in any one of claims 1 to 9, wherein:
the positive electrode mixture layer further comprises a conductive material.

11. The positive electrode (10) as claimed in any one of claims 1 to 10, wherein:
the positive electrode mixture layer further comprises a conductive material, wherein the conductive material is included in an amount of greater than about 0 wt% and less than or equal to about 5 wt% based on a total amount of the positive electrode mixture layer.

12. A rechargeable lithium battery (100) comprising the positive electrode (10) as claimed in any of claims 1 to 11.
